Europäisches Patentamt

European Patent Office

Office européen des brevets

(19)

(11) Veröffentlichungsnummer : **0 184 075 B1**

(12) **EUROPÄISCHE PATENTSCHRIFT**

(45) Veröffentlichungstag der Patentschrift :
07.09.88

(21) Anmeldenummer : 85114758.7

(22) Anmeldetag : 21.11.85

(51) Int. Cl.⁴ : **B 25 J 9/18**, G 05 B 19/19

(54) Einrichtung und Verfahren zum Regeln eines Industrieroboters.

(30) Priorität : 04.12.84 DE 3444210

(43) Veröffentlichungstag der Anmeldung :
11.06.86 Patentblatt 86/24

(45) Bekanntmachung des Hinweises auf die Patenterteilung : 07.09.88 Patentblatt 88/36

(84) Benannte Vertragsstaaten :
DE IT SE

(56) Entgegenhaltungen :
EP-A- 0 120 198
DE-A- 2 740 507

(73) Patentinhaber : **Siemens Aktiengesellschaft Berlin
und München
Wittelsbacherplatz 2
D-8000 München 2 (DE)**

(72) Erfinder : **Bartelt, Richard, Dipl.-Ing.
Essenbacher Strasse 15
D-8520 Erlangen (DE)**
Erfinder : **Meier, Christof, Dr.
Burgleite 25
D-8551 Heroldsbach (DE)**

# 0 184 075

**Beschreibung**

Die Erfindung betrifft eine Einrichtung zum Regeln eines Industrieroboters, nach dem Oberbegriff des Anspruchs 1. Ferner betrifft die Erfindung ein zugehöriges Verfahren zum Regeln eines industrieroboters, nach dem Oberbegriff des Anspruchs 3.

Beim Betrieb eines Industrieroboters mit mehreren Freiheitsgraden erweist es sich zunehmend als notwendig, bezüglich des Hand-/Arbeitspunktes seines Armes von einer Lagesteuerung zu einer Lageregelung überzugehen, d. h. Sensordaten über den Hand-/Arbeitspunkt regelkreisschließend rückzukoppeln und nicht nur z. B. Achswinkel des Industrieroboters auf Sollwerte einzustellen. Erstens erfordert eine Lagesteuerung aufwendige mechanische und antriebstechnische Konstruktionen, wenn eine hohe Wiederholungsgenauigkeit für programmierte Bewegungen des Roboterarms erreicht werden soll ; zweitens sollen prozeßabhängige Bahnkorrekturen möglich sein.

Ein gattungsgemäßes System zum Regeln eines Industrieroboters ist beispielsweise bekannt aus der DE-A-32 44 307 oder aus der Zeitschrift Industrie-Anzeiger 106 (1984) 23, Seite 31, und in Figur 2 der vorliegenden Beschreibung schematisch wiedergegeben.

Von einer Interpolationseinheit IPO in roboterunabhängigen (kartesischen, Welt-) Koordinaten sequentiell vorgegebene Bahnpunkte (z. B. kartesische Ortsvektoren $\underline{x}$) werden im Takt der Interpolation IPO (Interpolations-taktfrequenz = $f_I$) von einer Transformationseinheit T1 in roboterorientierte Koordinaten (z. B. Achswinkel) transformiert und einem Lageregler L zugeführt. Dessen Taktfrequenz $f_L$ beträgt ein Mehrfaches der Interpolationstaktfrequenz $f_I$, um — innerhalb eines Interpolationszyklus — abgestufte Sollvorgaben an die Antriebe des Industrieroboters IR zu geben und (z. B. auch hinsichtlich Geschwindigkeit und Beschleunigung) · kontrollierte Bewegungen der Armglieder des Industrieroboters IR zu veranlassen. Ein Sensor S erfaßt die Ist- oder Relativ-Lage des Hand-/Arbeitspunktes HP/AP (Relativ-Lage z. B. zu einem Werkstück, einer Schweißnaht, etc.), und eine Sensordaten-Verarbeitungseinheit V erzeugt aus dem Sensorsignal $\underline{s}$ einen im roboterunabhängigen Koordinatensystem definierten Korrekturvektor $\underline{c}$, der regelkreisschließend rückgekoppelt wird.

Dabei ist zu beachten,·daß der Rückkopplungszweig zu einem Summenpunkt $\Sigma$ am Eingang der Transformationseinheit T1 geführt ist, um den Korrekturvektor $\underline{c}$ implizit mit dem jeweils nächsten von der Interpolationseinheit IPO vorgegebenen Bahnpunkt $\underline{x}$ in das roboterorientierte Koordinatensystem zu transformieren. Diese Art der Rückkopplung birgt aber den systemimmanenten Nachteil, daß die Hand-/Arbeitspunktregelung eine Änderung des Sensorsignals unter Umständen erst nach einem vollen Interpolationszyklus berücksichtigt.

Aufgabe der Erfindung ist daher die Bereitstellung einer gattungsgeläßen Einrichtung· und eines gattungsgemäßen Verfahrens zum Regeln eines Industrieroboters, mit denen eine wesentlich schnellere Berücksichtigung des Sensorsignals gewährleistet ist.

Diese Aufgabe wird erfindungsgemäß hinsichtlich der Einrichtung gelöst durch eine im Rückkopplungszweig befindliche zweite Transformationseinheit für die Transformation des in einem roboterunabhängigen Koordinatensystem definierten Korrekturvektors in einen roboterorientierten Korrekturvektor und durch die Rückführung des Rückkopplungszweiges zu einem Summenpunkt am Eingang des Lagereglers. Eine Ausgestaltung dieser Lösung ist Gegenstand des Anspruchs 2.

Hinsichtlich des Verfahrens wird die gestellte Aufgabe erfindungsgemäß dadurch gelöst, daß der in einem roboterunabhängigen Koordinatensystem definierte Korrekturvektor in mehreren, insbesondere allen, Lagereglerzyklen eines Interpolationszyklus erzeugt, über eine zweite Transformationseinheit in einen roboterorientierten Korrekturvektor transformiert und zu einem Summenpunkt am Eingang des Lagereglers rückgekoppelt·wird.

In einer Ausgestaltung des lösungsgemäßen Verfahrens werden armpositionsabhängige Parameter für die zweite Transformationseinheit von einer der ersten Transformationseinheit beigeordneten Recheneinheit berechnet und bereitgestellt.

Anspruch 5 offenbart für die Transformation des Korrekturvektors eine Näherungsmethode, die darin besteht, daß armpositionsabhängige Parameter der zweiten Transformationseinheit nicht in jedem Lagereglerzyklus aktualisiert werden.

Vorteilhafte Methoden zur Anwendung im Rahmen der lösungsgemäßen Verfahren sind Gegenstand der weiteren Verfahrensansprüche.

Der Vorteil der lösungsgemäßen Einrichtungen und Verfahren ist in der wesentlich herabgesetzten Totzeit der Sensorsignalrückführung für den Hand-/Arbeitspunkt begründet. Diese Totzeit beträgt maximal nur die Dauer eines bzw. einiger Lagereglerzyklen anstatt eines ganzen Interpolationszyklus, was selbst bei Verfügbarkeit zunehmend schneller Interpolationseinheiten als systematischer Vorteil von Bedeutung bleiben wird.

Der Vorzug der Näherungsmethode nach Anspruch 5 liegt in der damit bewirkbaren Reduzierung des Aufwandes für die Transformation des Korrekturvektors bei gleichzeitiger Aufrechterhaltung des vorgenannten Vorteils. Erwähnenswert vorteilhaft ist dabei die Optimierungsmöglichkeit zwischen Aufwandsreduzierung (z. B. zur Entlastung eines Prozessors) und Regelgenauigkeit.

Anhand eines in den Zeichnungen dargestellten Ausführungsbeispiels wird die Erfindung näher erläutert. Es zeigen :

Fig. 1 einen schematischen Industrieroboterarm in einer Ist- und einer Soll-Position ;

Fig. 2 die Struktur einer herkömmlichen Bahnregelung ;

Fig. 3 die Struktur einer erfindungsgemäßen Bahnregelung.

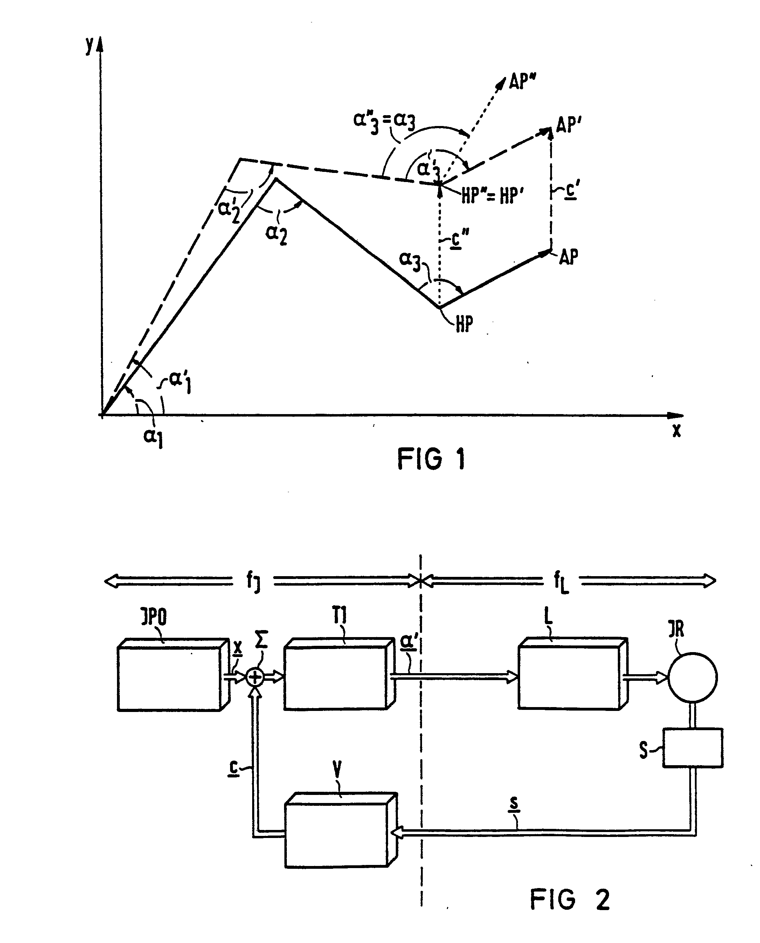

Das zweidimensionale Robotermodell nach Fig. 1 ist in einer Ist-Position (durchgezogene Knicklinie) und in einer Soll-Position (gestrichelte Knicklinie) dargestellt. Die Grundwinkel $\alpha_1$, $\alpha_2$ der Ist-Position legen hierbei die Lage des Handpunktes HP, der Orientierungswinkel $\alpha_3$ die Lage des Arbeitspunktes sowie die Orientierung des Endgliedes des Roboterarms fest. Die entsprechenden Größen der Soll-Position sind jeweils durch einen angefügten Apostroph gekennzeichnet. Winkelgrößen stellen roboterorientierte Koordinaten dar ; die kartesischen Koordinaten x, y verkörpern ein roboterunabhängiges Koordinatensystem.

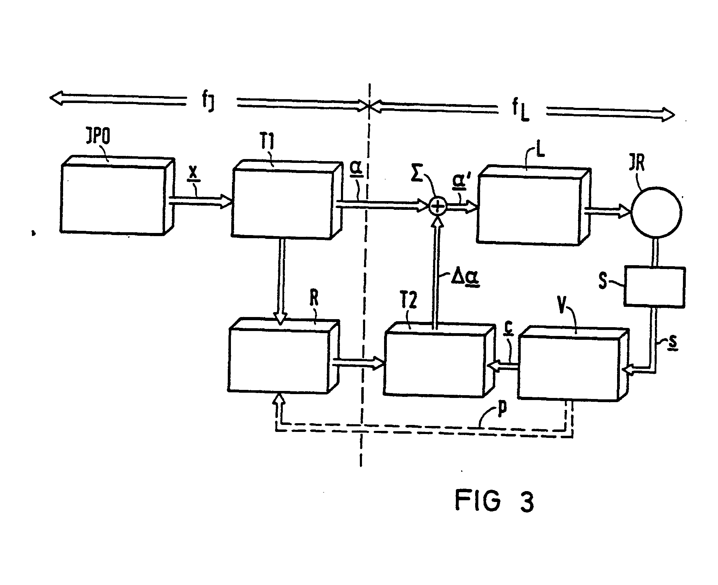

Der Arbeitspunkt AP soll in die Position AP' überführt werden (wegen einer z. B. prozeßbedingten Bahnänderung), was sich durch Vorgabe eines im roboterunabhängigen Koordinatensystem x, y definierten Korrekturvektors $\underline{c}'$ beschreiben läßt. Dieser muß, für die vorgabegemäße Einstellung der verfügbaren Roboterfreiheitsgrade, in die Berechnung der neuen roboterorientierten Koordinaten $\alpha'_1$, $\alpha'_2$, $\alpha'_3$ rückgekoppelt werden, entweder vor (siehe Fig. 2) oder nach (siehe Fig. 3) Koordinatentransformation.

Die gestrichelt gezeichnete Soll-Position beinhaltet nicht nur die Überführung des Arbeitspunktes AP in die Position AP', sondern auch die Beibehaltung der Raumorientierung des Endgliedes des Roboterarms. Zur Einsparung von Transformations- und sonstigem Zeit-/Materialaufwand ist ersatzweise eine Handpunktnachführung vorsehbar, bei der der Korrekturvektor $\underline{c}'' = \underline{c}'$ lediglich auf den Handpunkt HP angewendet wird, ohne die Orientierung des Endgliedes nachzustellen (siehe HP'', AP'', $\alpha''_3$ und punktierte Linien). Für kleine Bahnänderungen ist der dadurch verursachte Fehler in Abwägung gegen der Gewinn vor allem an Geschwindigkeit von untergeordneter Bedeutung.

Die bessere Erfüllung von Echtzeitanforderungen, in Form wesentlich herabgesetzter Regelungs-Totzeiten, zeichnet die in Fig. 3 dargestellte Regelstruktur gegenüber dem in Fig. 2 wiedergegebenen und in der Beschreibungseinleitung gewürdigten Stand der Technik aus.

Der neuen Regelstruktur nach Fig. 3 wird wiederum von einer Interpolationseinheit IPO eine Folge von Bahnpunkten in roboterunabhängigen Koordinaten, z. B. kartesische Ortsvektoren $\underline{x}$, sequentiell im Takt der Interpolationseinheit IPO (Interpolationstaktfrequenz = $f_i$) vorgegeben. Eine erste Transformationseinheit T1 transformiert jeden Bahnpunkt $\underline{x}$ in das roboterorientierte Koordinatensystem und gibt ihn z. B. als Vektor $\underline{\alpha}$ von Winkelsollwerten für die Achsen des Industrieroboters IR über einen Summenpunkt $\Sigma$ an den Lageregler L. Dessen Taktfrequenz $f_L$ beträgt ein Mehrfaches der Interpolationsfrequenz $f_i$, um — innerhalb jeweils einer Interpolationsperiode — abgestufte Sollvorgaben an die Antriebe des Industrieroboters IR zu geben und (z. B. auch hinsichtlich Geschwindigkeit und Beschleunigung) kontrollierte Bewegungen der Armglieder des Industrieroboters IR zu veranlassen.

Ein Sensor S (oder ein System von Sensoren) erfaßt die Ist- oder Relativ-Lage des Arbeitspunktes AP (Relativ-Lage z. B. zu einem Werkstück), und eine Sensordaten-Verarbeitungseinheit V erzeugt einmal pro Lagereglertaktperiode aus dem Sensorsignal $\underline{s}$ und gegebenenfalls aus weiteren Prozeßdaten einen im roboterunabhängigen (kartesischen) Koordinatensystem definierten Korrekturvektor $\underline{c}$, der anschaulich als Korrekturvektor $\underline{c}'$ aus Fig. 1 interpretiert werden kann, mit diesem aber nicht notwendig identisch ist, da gegebenenfalls aus Gründen der Regelungsstabilität eine Gewichtung oder sonstige aus der Regeltechnik bekannte Aufbereitung erst den tatsächlich rückzukoppelnden Korrekturvektor $\underline{c}$ ergibt. Genauso ist es denkbar, daß der Korrekturvektor $\underline{c}$ noch Komponenten über die Raumorientierung des Endgliedes enthält.

Dieser im roboterunabhängigen Koordinatensystem definierte Korrekturvektor $\underline{c}$ wird innerhalb der Lagereglertaktperiode, in der er entstand, von der zweiten Transformationseinheit T2 in einen Korrekturvektor $\Delta\underline{\alpha}$, d. h. in roboterorientierte Koordinaten, transformiert und zum Summenpunkt $\Sigma$ am Eingang des Lagereglers L regelkreisschließend rückgekoppelt, so daß am Eingang des Lagereglers L korrigierte roboterorientierte Soll-Koordinaten $\underline{\alpha}'$ anliegen.

Die Transformation des Korrekturvektors $\underline{c}$ in der zweiten Transformationseinheit T2 wird beispielsweise als Multiplikation einer Transformationsmatrix $\underline{B}$ mit dem Korrekturvektor $\underline{c}$ durchgeführt :

$$\Delta\underline{\alpha} = \underline{B} \cdot \underline{c}, \text{ d. h. ausführlich}$$

$$\begin{bmatrix} \Delta\alpha_1 \\ \Delta\alpha_2 \\ \Delta\alpha_3 \\ \Delta\alpha_4 \\ \Delta\alpha_5 \\ \Delta\alpha_6 \end{bmatrix} = \begin{bmatrix} b_{11} & b_{12} & b_{13} \\ b_{21} & b_{22} & b_{23} \\ b_{31} & b_{32} & b_{33} \\ b_{41} & b_{42} & b_{43} \\ b_{51} & b_{52} & b_{53} \\ b_{61} & b_{62} & b_{63} \end{bmatrix} \cdot \begin{bmatrix} c_x \\ c_y \\ c_z \end{bmatrix}$$

wobei $\alpha_1$ bis $\alpha_6$ die Winkelwerte der sechs Achsen eines Industrieroboters IR mit sechs Freiheitsgraden ; $\Delta\alpha_1$ bis $\Delta\alpha_6$ deren Korrekturwerte ; $c_x$, $c_y$, $c_z$ die kartesischen Komponenten des roboterunabhängigen Korrekturvektors $\underline{c}$ ; $b_{11}$ bis $b_{63}$ die Koeffizienten des Transformationsmatrix $\underline{B}$ bedeuten.

Die Koeffizienten $b_{mn}$ der Transformationsmatrix $\underline{B}$ hängen von der Armposition des Industrieroboters IR ab und werden von der der ersten Transformationseinheit T1 beigeordneten Recheneinheit R aufgrund von Daten aus der ersten Transformationseinheit T1 und gegebenenfalls aus der Sensordaten-Verarbeitungseinheit V berechnet und der zweiten Transformationseinheit T2 übergeben. Die Berücksichtigung von Daten $\underline{p}$ der Sensordaten-Verarbeitungseinheit V ist dabei nur notwendig, wenn relativ große Abweichungen zwischen einem ursprünglich vorgegebenen Bahnpunkt $\underline{x}$ und dem tatsächlichen Bahnpunkt $\underline{p}$ zu erwarten sind. Ansonsten ist mit hinreichender Genauigkeit der ursprünglich vorgegebene Bahnpunkt $\underline{x}$ als aktuelle Armposition für die Berechnung der aktuellen Transformationsmatrix $\underline{B}$ verwendbar.

Neben dieser Information über Armposition/Bahnpunkt $\underline{x}$ bezieht die Recheneinheit R von der ersten Transformationseinheit T1 noch die Information über deren Transformationsgleichungen, d. h. der Gleichungen, die die Transformation roboterunabhängig definierter Bahnpunkte $\underline{x}$ in roboterorientierte Koordinaten $\underline{\alpha}$ beschreiben. Dabei handelt es sich in der Regel nicht um lineare Operationen, so daß eine Matrix-Vektor-Multiplikation nicht zu ihrer Beschreibung ausreicht und für die weiteren exemplarischen Erläuterungen ein allgemeiner Transformationsoperator A als Abkürzung für die in der ersten Transformationseinheit T1 stattfindende Transformation verwendet wird :

$$\underline{\alpha} = A\,\{\underline{x}\} \tag{*}$$

Z. B. zur Berechnung der zu einem Bahnpunkt $\underline{x}$ gehörigen Koeffizienten $b_{m2}$ ($m = 1, 2, ..., 6$) wird von der Recheneinheit R die Transformationsgleichung (*) auf den Bahnpunkt $\underline{x}$ und anschließend auf einen in y-Richtung inkrementell verschobenen Bahnpunkt angewendet. Der Differenzvektor $\underline{\alpha}' - \underline{\alpha}$ ist dann die aktuelle zweite Spalte der Transformationsmatrix $\underline{B}$. Die anderen Spalten werden analog durch inkrementelle Verschiebungen in x- bzw. z-Richtung des (roboterunabhängigen) kartesischen Koordinatensystems ermittelt.

Alternativ ist die Ermittlung der Transformationsmatrix $\underline{B}$ durch Differenzierung der zu (*) inversen Transformationsgleichung (Rücktransformation)

$$\underline{x} = A^{-1}\{\underline{\alpha}\} \tag{**}$$

möglich. Am vereinfachenden Beispiel einer reinen Handpunktnachführung soll dies gezeigt werden : Für inkrementelle Winkeländerungen $\Delta\alpha''_1$ bis $\Delta\alpha''_3$ (zusammengefaßt zum Vektor $\Delta\underline{\alpha}''$) ergibt sich durch partielle Differentiation von (**) ein lineares Gleichungssystem für die resultierenden Korrekturen $\Delta x''$, $\Delta y''$, $\Delta z''$ der roboterunabhängigen Koordinaten des Handpunktes HP im dreidimensionalen Raum (diese Korrekturen werden zum Korrekturvektor $\Delta\underline{x}''$ zusammengefaßt und entsprechen sinngemäß dem Vektor $\underline{c}''$ aus Fig. 1) :

$$\Delta\underline{x}'' = \underline{c}'' = (\underline{B}'')^{-1} \cdot \Delta\underline{\alpha}''.$$

Durch Inversion der Matrix $(\underline{B}'')^{-1}$ gewinnt man die Formeln für die erforderliche Transformationsmatrix $\underline{B}''$, die Recheneinheit R errechnet die aktuellen Werte aus diesen Formeln und gibt sie an die zweite Transformationseinheit T2.

Eine stark aufwandsreduzierende Näherungsmethode für die beschriebene Regelung besteht darin, die Aktualisierung der Koeffizienten $b_{mn}$ ($m = 1, ..., 6$ ; $n = 1, 2, 3$) der Transformationsmatrix $\underline{B}$ nicht in jeder Lagereglertaktperiode, sondern nur einmal pro Interpolationstaktperiode vorzunehmen. Diese Entlastung läßt den dominierenden Vorteil — die Totzeitherabsetzung im Regelkreis — unberührt und erleichtert dessen Realisierung ohne Preisgabe des grundsätzlichen Genauigkeitsvorsprungs gegenüber den Lösungen des Standes der Technik. Im Fall weiter gesteigerter Genauigkeitsanforderungen wird die Aktualisierungsfrequenz erhöht bis maximal zur Lagereglertaktfrequenz. Eine Optimierung zwischen Aufwandsreduzierung (z. B. Prozessorentlastung bzw. Geschwindigkeitsgewinn) und Genauigkeit ist somit vorteilhaft möglich. Zur Realisierung der beschriebenen Transformationen und Reglerfunktionen lassen sich in vielen Fällen vorteilhaft Rechner, insbesondere Digitalrechner, einsetzen.

**Patentansprüche**

1. Einrichtung zum Regeln eines Industrieroboters (IR), mittels welcher der Hand-/Arbeitspunkt seines Armes auf einer Soll-Bahn führbar ist, mit

    a) einer Interpolationseinheit (IPO) für die Vorgabe einer Folge von Bahnpunkten in roboterunabhängigen Koordinaten ;

    b) einer ersten Transformationseinheit (T1) für die Transformation roboterunabhängiger in roboterorientierte Koordinaten ;

c) einem roboterorientierte Koordinaten verarbeitenden Lageregler (L) für die vorgabegemäße Einstellung der Freiheitsgrade des Industrieroboters ;

d) einer Sensorik (S) zur Erfassung der Ist- oder Relativ-Lage des Hand-/Arbeitspunktes ;

e) einer Sensordaten-Verarbeitungseinheit (V) zur Erzeugung eines in einem roboterunabhänigigen Koordinatensystem definierten Korrekturvektors ($\underline{c}$) ;

f) einen Rückkopplungszweig zur regelkreisschließenden Rückkopplung dieses Korrekturvektors ; gekennzeichnet durch

g) eine im Rückkopplungszweig befindliche zweite Transformationseinheit (T2) für die Transformation des in einem roboterunabhängigen Koordinatensystem (x, y, z) definierten Korrekturvektors ($\underline{c}$) in einen roboterorientierten Korrekturvektor ($\Delta\underline{\alpha}$) ;

h) die Rückführung des Rückkopplungszweiges zu einem Summenpunkt ($\Sigma$) am Eingang des Lagereglers (L).

2. Einrichtung zum Regeln eines Industrieroboters, nach Anspruch 1, gekennzeichnet durch eine der ersten Transformationseinheit (T1) beigeordnete Recheneinheit (R) zur Berechnung und Bereitstellung armpositionsabhängiger Parameter ($b_{mn}$) für die zweite Transformationseinheit (T2).

3. Verfahren zum Regeln eines Industrieroboters (IR), durch welches der Hand-/Arbeitspunkt (AP) seines Armes auf einer Soll-Bahn geführt wird, wobei von einer Interpolationseinheit (IPO) eine Folge von Bahnpunkten in roboterunabhängigen Koordinaten sequentiell, insbesondere taktweise in einem Interpolationstakt ($f_i$), vorgegeben wird ; jeder Bahnpunkt in einer ersten Transformationseinheit (T1) in roboterorientierte Koordinaten transformiert und einem für das vorgabegemäße Einstellen der Freiheitsgrade des Industrieroboters zuständigen Lageregler (L), dessen Regelzykluszeit ($f_L$) einen Bruchteil der Interpolationszykluszeit beträgt, zugeführt wird ; Sensordaten über die Ist- oder Relativ-Lage des Hand-/Arbeitspunktes gewonnen und in einer Sensordaten-Verarbeitungseinheit (V) zu einem in einem roboterunabhängigen Koordinatensystem definierten Korrekturvektor ($\underline{c}$) verarbeitet werden ; und dieser Korrekturvektor regelkreisschließend rückgekoppelt wird, dadurch gekennzeichnet, daß der in einem roboterunabhängigen Koordinatensystem (x, y, z) definierte Korrekturvektor ($\underline{c}$) in mehreren, insbesondere allen, lagereglerzyklen eines Interpolationszyklus erzeugt, über eine zweite Transformationseinheit (T2) in einen roboterorientierten Korrekturvektor ($\Delta\underline{\alpha}$) transformiert und zu einem Summenpunkt ($\Sigma$) am Eingang des Lagereglers (L) rückgekoppelt wird.

4. Verfahren zum Regeln eines Industrieroboters, nach Anspruch 3, dadurch gekennzeichnet, daß armpositionsabhängige Parameter ($b_{mn}$) für die zweite Transformationseinheit (T2) von einer der ersten Transformationseinheit (T1) beigeordneten Recheneinheit (R) berechnet und bereitgestellt werden.

5. Verfahren zum Regeln eines Industrieroboters, nach Anspruch 3 oder 4, dadurch gekennzeichnet, daß armpositionsabhänige Parameter ($b_{mn}$) der zweiten Transformationseinheit (T2) nicht in jedem Lagereglerzyklus, sondern insbesondere nur einmal pro Interpolationszyklus aktualisiert werden.

6. Verfahren zum Regeln eines Industrieroboters, nach Anspruch 3, 4 oder 5, dadurch gekennzeichnet, daß die Transformation des in einem roboterunabhängigen Koordinatensystem definierten Korrekturvektors ($\underline{c}$) in der zweiten Transformationseinheit (T2) als Multiplikation einer Transformationsmatrix ($\underline{B}$), deren Koeffizienten ($b_{mn}$) von der Armposition abhängen, mit dem im roboterunabhängigen Koordinatensystem (x, y, z) definierten Korrekturvektor ($\underline{c}$) durchgeführt wird.

7. Verfahren zum Regeln eines Industrieroboters, nach Anspruch 6, dadurch gekennzeichnet, daß die Transformationsmatrix ($\underline{B}$) für die jeweils aktuelle Armposition ermitteltwird durch

a) Differenzbildung in der ersten Transformation (A), wobei die Transformationsgleichung ($\underline{\alpha} = A \{ x \}$) der ersten Transformationseinheit (T1) für die aktuelle Armposition ($\underline{x}$) sowie für inkrementell verschobene Armpositionen ($\underline{x} + \Delta\underline{x}$) betrachtet wird oder

b) Differentiation der inversen ersten Transformation ($\underline{x} = A^{-1} \{ \underline{\alpha} \}$) mit anschließender Inversion und Ermittlung der aktuellen Parameter ($b_{mn}$) durch die Recheneinheit (R).

## Claims

1. Device for controlling an industrial robot (IR), by means of which the hand/working point of the robot's arm can be guided on a desired path, comprising :

a) an interpolation unit (IPO) for interpolating a series of line points in robot-independent co-ordinates ;

b) a first transforming unit (T1) for the transformation of robot-independent co-ordinates into robot-oriented co-ordinates ;

c) a position controller (L) which processes robot-oriented co-ordinates for adjusting the degree of freedom of the industrial robot in accordance with the interpolation ;

d) a sensory analysis device (S) for determining the actual or relative position of the hand/working point ;

e) a sensor data processing unit (V) for producing an adjustment vector ($\underline{c}$) which is defined in a robot-independent co-ordinate system ;

f) a feedback branch for the feedback of this adjustment vector, closing the control circuit ; characterised by

g) a second transforming unit (T2) located in the feedback branch for the transformation of the adjustment vector ($\underline{c}$), defined in a robot-independent co-ordinate system (x, y, z) into a robot-oriented adjustment vector ($\Delta\underline{\alpha}$) ;

h) the feedback of the feedback branch to a summation point ($\Sigma$) at the input of the position controller (L).

2. Device for controlling an industrial robot, according to claim 1, characterised by an arithmetic unit (R) associated with the first transforming unit (T1) for the calculation and preparation of arm-position-dependent parameters ($b_{mn}$)for the second transforming unit (T2).

3. Method for controlling an industrial robot (IR), by means of which the hand/working point (AP) of the robot's arm is guided on a desired path, wherein a series of line points in robot-independent co-ordinates is interpolated sequentially, particularly cyclically, in an interpolation cycle ($f_i$), by an interpolation unit (IPO) ; each line point is transformed in a first transforming unit (T1) into robot-oriented co-ordinates and is fed to a position controller (L) suitable for the adjustment of the degree of freedom of the industrial robot in accordance with the interpolation, the control cycle time ($f_L$) of the position controller amounting to a fraction of the interpolation cycle time ; sensor data relating to the actual or relative position of the hand/working point are obtained and processed in a sensor data processing unit (V) to produce an adjustment vector ($\underline{c}$) defined in a robot-independent co-ordinate system ; and this adjustment vector is fed back to close the control circuit, characterised in that the adjustment vector ($\underline{c}$), defined in a robot-independent co-ordinate system (x, y, z), is produced in several, particularly all, position controller cycles of one interpolation cycle, is transformed via a second transforming unit (T2) into a robot-orientated adjustment vector ($\Delta\underline{\alpha}$) and fed back to a summation point ($\Sigma$) at the input of the position controller.

4. Method for controlling an industrial robot, according to claim 3, characterised in that arm-position-dependent parameters ($b_{mn}$) for the second transforming unit (T2) are calculated and prepared by an arithmetic unit (R) associated with the first transforming unit (T1).

5. Method for controlling an industrial robot, according to claim 3 or 4, characterised in that arm-position-dependent parameters ($b_{mn}$) of the second transforming unit (T2) are not actualised in every cycle of the position controller, but particularly only once per interpolation cycle.

6. Method for controlling an industrial robot according to claim 3, 4 or 5, characterised in that the transformation of the adjustment vector ($\underline{c}$), defined in a robot-independent co-ordinate system, is carried out in the second transforming unit (T2) as a multiplication of a transformation matrix ($\underline{B}$), whose co-efficients ($b_{mn}$) depend on the arm-position, by means of the adjustment vector ($\underline{c}$) defined in the robot-independent co-ordinate system (x, y, z).

7. Method for controlling an industrial robot, according to claim 6, characterised in that the transformation matrix ($\underline{B}$) for the current arm position is determined in each case by

a) the difference-forming in the first transformation (A), whereby the equalization of the transformation ($\underline{\alpha} = A\{x\}$) of the first transforming unit (T1) is examined for the actual arm position ($\underline{x}$) and for incrementally displaced arm positions ($\underline{x} + \Delta\underline{x}$), or

b) differentiations of the inverse first transformation ($\underline{x} = A^{-1}\{\underline{\alpha}\}$) with subsequent inversion and determination of the actual parameters ($b_{mn}$) by the arithmetic unit (R).

**Revendications**

1. Dispositif pour régler un robot industriel (IR), à l'aide duquel le point formant main/point de travail de son bras peut être guidé sur une trajectoire de consigne, comportant

a) une unité d'interpolation (IPO) servant à prédéterminer une suite de points de la trajectoire dans des coordonnées indépendantes du robot ;

b) une première unité de transformation (T1) servant à transformer les coordonnées indépendantes du robot en coordonnées rapportées au robot ;

c) un régulateur de position (L) traitant les coordonnées rapportées au robot et servant à régler d'une manière prédéterminée les degrés de liberté du robot industriel ;

d) un système de détection (S) servant à détecter la position réelle ou la position relative du point formant main/point de travail ;

e) une unité (V) de traitement des données du détecteur, servant à produire un vecteur correctif ($\underline{c}$) défini dans un système de coordonnées indépendantes du robot ;

f) une branche de réaction pour transmettre par réaction ce vecteur correctif, d'une manière fermant le circuit de réglage ;
caractérisé par

g) une seconde unité de transformation (T2) située dans la branche de réaction et servant à transformer le vecteur correctif ($\underline{c}$), défini dans un système de coordonnées (x, y, z) indépendant du robot, en un vecteur correctif ($\Delta\underline{\alpha}$) rapporté au robot ;

h) le retour de la branche de réaction à un nœud de sommation ($\Sigma$) situé à l'entrée du régulateur de position (L).

2. Dispositif pour régler un robot industriel suivant la revendication 1, caractérisé par une unité de

6

calcul (R) adjointe à la première unité de transformation (T1) et servant à calculer et à traiter des paramètres ($b_{mn}$), qui dépendent de la position du bras, pour la seconde unité de transformation (T2).

3. Procédé pour régler un robot industriel (IR), à l'aide duquel le point formant main/point de travail (AP) du bras du robot est guidé sur une trajectoire de consigne, et selon lequel une suite de points de la trajectoire est prédéterminée par une unité d'interpolation (IPO), dans des coordonnées indépendantes du robot, d'une manière séquentielle et notamment de façon cadencée conformément à une cadence d'interpolation ($f_l$) ; chaque point de la trajectoire est transformé, dans une première unité de transformation (T1), en des coordonnées rapportées au robot et est envoyé à un régulateur de position (L), qui s'occupe du réglage prédéterminé des degrés de liberté du robot industriel et dont la durée ($f_L$) du cycle de réglage est égale à une fraction de la durée du cycle d'interpolation. Des données du détecteur relatives à la position réelle ou à la position relative du point formant main/point de travail sont obtenues et traitées dans une unité (B) de traitement des données du détecteur, pour former un vecteur correctif ($\underline{c}$) défini dans un système de coordonnées indépendant du robot ; et ce vecteur correctif est renvoyé par réaction d'une manière fermant le circuit de réglage, caractérisé par le fait que le vecteur correctif ($\underline{c}$) défini dans un système de coordonnées (x, y, z) indépendant du robot est produit pendant plusieurs et notamment tous les cycles de réglage de position d'un cycle d'interpolation, est transformé par l'intermédiaire d'une seconde unité de transformation (T2) en un vecteur correctif ($\Delta\underline{\alpha}$) rapporté au robot et est renvoyé par réaction à un nœud de sommation ($\Sigma$) situé à l'entrée du régulateur de position (L).

4. Procédé pour régler un robot industriel suivant la revendication 3, caractérisé par le fait que des paramètres ($b_{mn}$), qui dépendent de la position du bras, pour la seconde unité de transformation (T2) sont calculés et préparés par une unité de calcul (R) adjointe à la première unité de transformation (T1).

5. Procédé pour régler un robot industriel suivant la revendication 3 ou 4, caractérisé par le fait que des paramètres ($\dot{b}_{mn}$), dépendant de la position du bras, de la seconde unité de transformation (T2) sont actualisés non pas lors de chaque cycle du régulateur de position, mais notamment uniquement une seule fois lors de chaque cycle d'interpolation.

6. Procédé pour régler un robot industriel, suivant la revendication 3, 4 ou 5, caractérisé par le fait que la transformation du vecteur correctif ($\underline{c}$) défini dans un système de coordonnées indépendant du robot est exécutée dans la seconde unité de transformation (T2) sous la forme d'une multiplication d'une matrice de transformation ($\underline{B}$), dont les coefficients ($b_{mn}$) dépendent de la position du bras, par le vecteur correctif ($\underline{c}$) défini dans le système de coordonnées (x, y, z) indépendant du robot.

7. Procédé pour régler un robot industriel suivant la revendication 6, caractérisé par le fait que la matrice de transformation ($\underline{B}$) est déterminée pour la position actuelle respective du bras, par

a) formation d'une différence lors de la première transformation (A), l'équation de transformation ($\underline{\alpha} = A \{ x \}$) de la première unité de transformation (T1) étant prise en considération pour la position actuelle ($\underline{x}$) du bras ainsi que pour des positions du bras ($\underline{x} + \Delta\underline{x}$) décalées de façon incrémentale, ou

b) différentiation de la première transformation inverse ($\underline{x} = A^{-1} \{ \underline{\alpha} \}$), suivie d'une inversion et de la détermination des paramètres actuels ($b_{mn}$) par l'unité de calcul (R).

FIG 1

FIG 2

1

0 184 075

FIG 3

2